# EUROPÄISCHE PATENTSCHRIFT

(11) **EP 2 457 649 B1**
(45) Veröffentlichungstag und Bekanntmachung des Hinweises auf die Patenterteilung: **11.03.2015**
(21) Anmeldenummer: 11184621.8
(22) Anmeldetag: 11.10.2011
(51) Int. Cl.: B01J 8/18, B01J 8/24

(54) **Wirbelschichtapparat und Verfahren zum Betreiben eines Wirbelschichtapparates**
Fluidised bed apparatus and method for operating same
Installation à lit fluidisé et procédé de fonctionnement d'une installation à lit fluidisé

(30) Priorität: 25.11.2010 DE 102010052344
(43) Veröffentlichungstag der Anmeldung: 30.05.2012
(73) Patentinhaber: BMA Braunschweigische Maschinenbauanstalt AG, 38122 Braunschweig (DE)
(72) Erfinder: Caspers, Gerald, 38527 Meine (DE)
(74) Vertreter: Einsel, Martin

(56) Entgegenhaltungen:
- EP-A2- 0 385 789
- US-A- 4 244 698
- US-A- 4 392 814
- US-A1- 2003 027 949

## Beschreibung

Die Erfindung betrifft einen Wirbelschichtapparat, mit einem Verteilboden, mit einem Fluidisierungsmedium, welches von unten durch den Verteilboden strömt, mit einer Zuführanordnung, mit der Partikel dem Bereich oberhalb des Verteilbodens zugeführt werden, wobei oberhalb des Verteilbodens eine Wirbelschicht aus Partikeln und Fluidisierungsmedium gebildet wird. Die Erfindung betrifft außerdem ein Verfahren zum Betreiben eines Wirbelschichtapparates, in welchem Partikel über ein Verteilboden geführt werden, durch welchen von unten ein Fluidisierungsmedium strömt, sodass sich eine Wirbelschicht ausbildet.

Wirbelschichtapparate werden mit Erfolg eingesetzt, um beispielsweise wie in der DE 100 16 905 B4 und der DE 100 16 906 B4 beschrieben Gelierhilfsmittel herzustellen. Bei der Herstellung von Cerealien oder anderen Maisprodukten und der Trocknung diverser Arten von Biomassen, etwa extrahierten Zuckerrübenschnitzeln, Schlempe aus der Produktion von Ethanol (etwa als DDGS, Dried Distillers Grains with Solubles, sogenannte Trockenschlempe) oder auch von Holzschnitzeln können Wirbelschichtapparate, insbesondere Wirbelschicht-Verdampfungstrockner ebenfalls mit Nutzen eingesetzt werden. Weitere Möglichkeiten werden in der EP 1 956 326 B1 beschrieben.

In einem Wirbelschichtapparat werden zunächst Zuckerteilchen oder auch andere bei der Herstellung zu verarbeitende kleine Partikel zugeführt und dann in einem Wirbelschichtverfahren im Durchlauf diese zugeführten Partikel durch eine Luftbeaufschlagung von unten fluidisiert. Die Partikel werden also durch die zuströmende Luft angehoben und in diesem Zustand gehalten. Je nach konkreter Weiterverarbeitung können dann die Partikel von oben mit wässrigen Lösungen bedüst und in der gleichen oder einer folgenden Zone mit anderen Mitteln agglomeriert werden. Die Partikel können dabei kontinuierlich oder auch im Batchverfahren in horizontaler Richtung über den Verteilboden geführt werden, um nacheinander verschiedene Zonen beziehungswiese Sektionen des Wirbelschichtapparates zu durchlaufen. In weiteren Fluidisierungszonen kann das aufgedüste Beschichtungsmaterial nachgetrocknet werden.

Die Luftbeaufschlagung erfolgt von unten durch einen Verteilboden, der auch als Ventilboden oder Anströmboden bezeichnet wird. Dieser Verteilboden weist eine Vielzahl von kleinen Durchbohrungen auf, durch die das Fluidisierungsmedium -meist also Luft oder Dampf- nach oben geblasen wird.

Wichtig für das Funktionieren derartiger Wirbelschichtapparate ist es, dass die Fluidisierung gleichmäßig und stetig erfolgt und keine Verklumpung oder Verblockung eintritt. Letzteres kann geschehen, wenn in Wirbelschichten eine ungenügende Fluidisierung eintritt. Dann kann es zu Ablagerungen auf dem Verteilboden kommen. Diese Effekt verstärkt sich also gewissermaßen selbst: Durch ungenügende Fluidisierung kommt es zu Ablagerungen; durch die Ablagerungen wird die Fluidisierung beeinträchtigt. Werden diese Ablagerungen sehr massiv, dann kommt der Transport durch die Wirbelschicht zum Erliegen. Man nennt das, die Wirbelschicht "verblockt".

Eine Verblockung führt nicht nur dazu, dass die gerade in dem Moment in der Wirbelschicht befindlichen Partikel nicht richtig weiterbehandelt werden, sondern sie führen unter Umständen zu einem kompletten Ausfall der Anlage, da auch die Wirbelschicht insgesamt unterbrochen wird und keine weitere Fortführung des Vorganges in dem Wirbelschichtapparat mehr möglich ist. Vor einer erneuten Produktionsaufnahme muss also die Verblockung beseitigt werden, was recht aufwendig ist und zu einem tagelangen Produktionsausfall führen kann.

Den Betreibern derartiger Anlagen ist das Risiko bekannt. Um das Risiko zu vermeiden, tendieren sie dazu, die Anlagen mit verminderter Leistung zu betreiben und auf diese Weise genügend Sicherheitsreserven gegen eine Verblockung zur Verfügung zu haben. Das führt aber dazu, dass die Wirbelschichtapparate nicht effektiv genutzt oder jedenfalls nicht so effektiv genutzt werden, wie dies an sich möglich wäre.

Ein Verblocken ist optisch nicht sofort zu erkennen, erst dann, wenn ein echter Schaden eingetreten ist und der Produktionsausfall bereits begonnen hat.

Wünschenswert wäre es, wenn das Auftreten derartiger Verblockungen zumindest reduziert und möglichst weitgehend vermieden werden kann.

Aufgabe der folgenden Erfindung ist es, einen Wirbelschichtapparat vorzuschlagen, mit dem dem Auftreten von Verblockungen entgegengewirkt werden kann.

Diese Aufgabe wird bei einem gattungsgemäßen Wirbelschichtapparat mit der Erfindung dadurch gelöst, dass ein erster Temperatursensor unterhalb des Verteilbodens angeordnet ist, dass ein zweiter Temperatursensor oberhalb des Verteilbodens unmittelbar auf dem Verteilboden oder im untersten Bereich der Wirbelschicht angeordnet ist, dass die beiden Temperatursensoren mit einer Auswertungseinrichtung verbunden sind, und dass die Auswertungseinrichtung so ausgebildet ist, dass sie abhängig von der Differenz der von den beiden Temperatursensoren gemessenen Temperaturen ein Signal für die Prozesssteuerung bereitstellt.

Die Erfindung wird ferner durch ein gattungsgemäßes Verfahren mit der Erfindung dadurch gelöst, dass eine Temperatur unterhalb des Verteilbodens gemessen wird, dass eine Temperatur unmittelbar oberhalb des Verteilbodens gemessen wird, dass die gemessenen Temperaturwerte unterhalb und oberhalb des Verteilbodens miteinander verglichen werden, und dass abhängig von dem zeitlichen Verlauf des Vergleichswertes Einfluss auf die Prozesssteuerung genommen wird.

Mit der Erfindung werden also insbesondere in den kritischen Sektionen des Wirbelschichtapparates unter und auf dem Verteilboden Sensoren installiert. Es handelt sich um Sensoren, die oberhalb des Verteilbodens die Temperatur der Wirbelschicht feststellen. Diese Sensoren greifen also in den Fluidisierungsvorgang nicht ein und beeinträchtigen ihn dementsprechend auch nicht. Sie stören auch die Funktionalität der Wirbelschicht im Übrigen nicht.

Zu diesem Zweck wird in einem sehr geringen Abstand von bevorzugt etwa 1 mm bis 5 mm oberhalb des Verteilbodens zumindest ein Temperatursensor angeordnet.

Ein weiterer Temperatursensor ist unter dem Verteilboden angeordnet.

Eine Vergleichseinrichtung ist vorgesehen, welche die von den beiden Sensoren oberhalb und unterhalb des Verteilbodens gemessenen Temperaturen miteinander vergleichen. Dadurch, dass eine Referenztemperatur durch die Temperatursensoren unterhalb des Verteilbodens herangezogen wird, wird der erfindungsgemäß mögliche Vorgang unabhängig von der Temperatur, in dem die gesamte Anlage betrieben wird, insbesondere auch davon, welchem Verarbeitungsschritt sich gerade die Partikel in der Wirbelschicht befinden, ob also beispielsweise gerade ein Erwärmungs- oder Trockungsvorgang stattfindet.

Handelt es sich nun um eine Wirbelschicht mit einer guten Fluidisierung, so ist die Differenz zwischen den beiden gemessenen Temperaturen sehr gering. Die Temperatur unterhalb des Verteilbodens und diejenige innerhalb der Wirbelschicht unmittelbar oberhalb des Verteilbodens ist etwa gleich, da es für den Bereich der Wirbelschicht unmittelbar oberhalb des Verteil bodens keine Gründe für eine höhere Temperatur gibt. Dort wird die Temperatur praktisch des Ventilbodens selbst gemessen, modifiziert durch den Wärmeaustausch mit einzelnen Partikeln in diesem Bereich der Wirbelschicht und der Temperatur des durch den Verteil boden strömenden Mediums.

Damit die Partikel der Wirbelschicht einen Einfluss auf die Temperatur haben können, müsste ein nennenswerter Temperaturaustausch stattfinden. Betrachtet man nun den Abstand eines Messpunktes zum Verteilboden, so ergibt sich folgendes: ist dieser Abstand kleiner als etwa das 15-30fache des Partikeldurchmessers, so ist der Temperaturaustausch noch nicht vollständig abgeschlossen. In dieser dann zu geringen Distanz befinden sich nicht genug Partikel, um die Temperatur des Fluidisierungsmediums entscheidend zu ändern.

Bahnt sich jedoch eine Verblockung an, so kommt es in der Nähe des Sensors, also unmittelbar über dem Verteilboden, zu einer Verringerung des Durchflusses des Fluidisierungsmediums. Diese Tendenz führt schließlich zum völligen Stillstand dieses Flusses. Je geringer aber der Durchfluss des Fluidisierungsmediums durch den Verteilboden nach oben ist, desto mehr Partikel des in der Wirbelschicht zu behandelnden Produktes gelangen in die Nähe des Sensors. Das bedeutet, dass der Sensor dann eine Temperatur misst, die immer weniger von der Temperatur des Fluidisierungsmediums und immer mehr vom Produkt beziehungsweise den Partikeln beeinflusst wird.

Folglich steigt bei einer sich anbahnenden Verblockung die Differenz zwischen der Temperatur unter dem Verteilboden und der Temperatur, welche der oder die Sensoren knapp oberhalb des Verteilbodens im untersten Bereich der Wirbelschicht feststellen.

Diese Temperaturdifferenz kann recht präzise festgestellt werden; darüber hinaus steigt diese Temperaturdifferenz bei einer sich anbahnenden Verblockung kontinuierlich und erfassbar an.

Verblockungen sind insbesondere in Wirbelschichtverdampfungstrocknern ein gravierendes Problem. Herkömmlich wird versucht, durch die Vorgabe von Prozessparametern und optimalen Verfahrensweisen Prozessbedingungen zu schaffen, die ein Entstehen von Verblockungen weitmöglichst vermeiden. Dies ist auch teilweise erfolgreich, es kann jedoch gleichwohl immer wieder beim täglichen Betrieb von Wirbelschichtapparaten zu Verblockungen kommen, deren Ursache sich meist im Nachhinein nicht oder nur schwer feststellen lässt.

Es hat sich in Versuchen bereits bestätigt, dass die Vorteile der Erfindung recht erheblich sind. Mittels der Erfindung kann eine sich anbahnende ungenügende Fluidisierung recht frühzeitig erkannt werden. Diese frühzeitige Erkennung ermöglicht es, den Verblockungen entgegen zu wirken und ihre Entstehung von vornherein zu vermeiden. Dazu kann beispielsweise eine gezielte Veränderung der Prozessparameter beitragen, die durch die frühzeitige Erkennung der entstehenden ungenügenden Fluidisierung möglich wird.

Die Temperaturunterschiede an sich sind zwischen den bereits verblockten Bereichen und den Bereichen mit normaler und gewünschter Fluidisierung nicht sehr groß, sodass rein optische Erkennungsmethoden, auch in Form thermographischer Methoden wie beispielsweise mittels einer Wärmebildkamera, unbefriedigende Erkenntnisse liefern. Mit den Temperatursensoren können jedoch auch schon die sich entwickelnden geringen Temperaturunterschiede in der Entstehung zunächst erfasst, dann erkannt, daraufhin ausgewertet und schließlich zu Maßnahmen herangezogen werden.

Die Temperatur der zugeführten Partikel des Produktes ist allerdings etwas niedriger als die des Fluidisierungsmediums, da es sich um ein Trocknungsverfahren handelt. Das bedeutet, dass die Differenz zwischen den beiden gemessenen Temperaturen der beiden Sensoren, also die Differenz zwischen der Temperatur unter dem Verteilboden und der Temperatur des Sensors oberhalb des Verteilbodens, abnimmt.

Diese Differenz kann also sehr genau beobachtet werden. Mittels der Vergleichsschaltung oder einer weiteren Auswerteeinrichtung können Grenzwerte für die Differenz zwischen den beiden Temperaturen festgelegt werden. Bei Überschreiten dieser Grenzwerte können dann entsprechende Handlungen im Prozessleitsystem ausgelöst werden.

Die Beobachtung der Temperaturdifferenz ist anderen Möglichkeiten deutlich überlegen, die schon getestet wurden, um den Verblockungen entgegen zu wirken. So kann man versuchen, den Durchsatz des Fluidisierungsmediums in bestimmten Bereichen oder kritischen Sektionen zu messen. Diese Vorgehensweise ist aber zugleich ein Eingriff in den Fluidisierungsvorgang selbst. Darüber hinaus ist er relativ ungenau und nur dann mit Nutzen einsetzbar, wenn die Wirbelschicht in verschiedene Sektionen unterteilt werden kann, die eine separate Messung des Durchsatzes des Fluidisierungsmediums gerade in einer kritischen Sektion erlaubt.

Das Heranziehen von indirekten Parametern im Übrigen hat ebenfalls bisher noch keinen Erfolg gezeigt.

Besonders bevorzugt ist es bei der Erfindung, wenn über den Verteilboden nicht nur ein, sondern gleich mehrere Sensoren in Rastern angeordnet werden, und zwar insbesondere dort, wo kritische Bereiche für eine Verblockung aus Erfahrung oder aus strömungstechnischen Gründen zu erwarten oder zu vermuten sind. Durch den Einsatz dieser mehreren Sensoren kann insbesondere zunächst auch der Situation begegnet werden, dass nur in einem bestimmten Bereich der Wirbelschicht, also einer bestimmten Sektion oberhalb des Verteilbodens, eine Verblockung auftritt, und dieser bestimmte Bereich gerade nicht durch einen Sensor überwacht wurde.

Darüber hinaus kann durch die Rasterung aber auch ein Rückschluss auf mögliche Ursachen der gerade entstehenden Verblockungen getroffen werden und die entsprechende Prozesssteuerung abhängig von diesen Rückschlüssen gesteuert werden.

Der oder die Sensoren werden bevorzugt mit ihrem Kopf durch eine vorgesehene Bohrung im Verteilboden montiert.

Auf diese Weise kann auch genau lokalisiert werden, wo und wann eine Verblockung entsteht.

Alle Anschlüsse zu den Sensoren können unterhalb des Verteilbodens verlegt und angeordnet werden. Das bedeutet, dass durch die Anordnung der Sensoren die wertvolle Wirbelschicht nicht beeinträchtigt wird, also keine mechanische Beeinflussung erfolgt.

Besonders überraschend für den Fachmann ist die ungewöhnliche Anordnung der Temperatursensoren knapp über den Verteilboden. Zu ganz anderen Zwecken sind bisher auch schon gelegentlich Temperatursensoren in Wirbelschichtapparaten eingesetzt werden, und zwar stets in einem möglichst großen Abstand vom Verteilboden. Damit sollte sichergestellt werden, dass die Temperatursensoren die Temperatur nach einem erfolgten gegenseitigen Austausch von Stoffen und Temperaturen feststellen, also nach dem Abschluss der entsprechenden Vorgänge. Dadurch möchte man eine Regelung von Prozessparametern in Abhängigkeit von Werten vornehmen, die bereits die erfolgte Weiterverarbeitung durch die Wirbelschicht berücksichtigen. Damit hat aber die vorliegende Erfindung nichts zu tun, die ja ganz bewusst in einem Bereich Werte misst, in dem der Austausch praktisch noch kaum begonnen hat, beziehungsweise in dem festgestellt werden kann, ob und in welcher Form der Austausch gerade stattfindet oder eben nicht stattfindet.

Es entsteht sozusagen ein Vorwarnsystem für Wirbelschichten gegenüber einer Verblockung.

Mit einer derartigen Konzeption kann überraschend und entgegen den Erwartungen des Fachmanns bereits frühzeitig erkannt werden, dass gerade der Zustand erreicht ist, in dem das Entstehen von Ablagerungen auf dem Verteilboden der Wirbelschicht beginnt.

Wenn dies erkannt ist, kann sofort eine Veränderung der Prozessparameter vorgenommen werden, um die entstehende Verblockung wieder aufzulösen oder zumindest ein Intensivieren dieses Entstehungsprozesses durch Überfüllen des Wirbelschichtraumes verhindert werden.

Von besonderem Vorteil ist es, dass auch eine Nachrüstung bestehender Wirbelschichtapparate mit den erfindungsgemäßen Elementen erfolgen kann. Auch diese Nachrüstung ist zu durchaus wirtschaftlichen Kosten möglich. Es muss lediglich ein Umbau oder ein Austausch des Verteilbodens mit einem Einbau entsprechender Temperatursensoren erfolgen, ferner ein zusätzliches Anbringen der Vergleichsschaltung und der entsprechenden Auswerteeinrichtung.

Die Temperatursensoren, die für die erfindungsgemäßen Zwecke geeignet sind, stehen in großer Auswahl bereits zur Verfügung, was die Kosten für den Aufbau eines erfindungsgemäßen Wirbelschichtapparates in überschaubarem Rahmen hält.

Bei Versuchen hat sich auch schon bestätigt, dass die Messung der Differenztemperatur anderen Versuchen überlegen ist. So ist etwa eine Differenzdruckmessung über die Wirbelschicht nur ein Durchschnittswert, der den Zustand nicht direkt wiedergibt und daher eine beginnende Verblockung nicht schnell genug erkennen lässt. Ebenso ist es bei der Beobachtung von Prozessparametern, wie etwa dem Produktdurchsatz, der Produktfeuchtigkeit, der durchschnittlichen Partikelgröße oder dem Durchsatz des Fluidisierungsmediums. Auch hier handelt es sich letztlich um Stellvertretergrößen, die nicht den Zustand direkt wiedergeben, während dies erfindungsgemäß durch die Temperaturdifferenz oberhalb und unterhalb des Verteilbodens praktisch unverzögert erfolgt.

Diese Messung ist auch einer anderen Temperaturmessung überlegen, bei der die Temperatur oberhalb der Wirbelschicht gemessen und eine Differenz zur Sättigungstemperatur des Fluidisierungsmediums als Kriterium festgelegt wird. Die Temperatur oberhalb der Wirbelschicht entsteht erst zeitverzögert beziehungsweise gibt ein Indiz für eine Verblockung erst zu einem verspäteten Zeitpunkt.

Im Folgenden wird anhand der Zeichnung ein Ausführungsbeispiel im Einzelnen beschrieben. Es zeigen:
- **Figur 1**: eine schematische Ansicht eines Wirbelschichtapparates gemäß der Erfindung bei normaler Fluidisierung;
- **Figur 2**: den Wirbelschichtapparat aus Figur 1 bei einer eintretenden Verblockung, und
- **Figur 3**: eine mögliche Signalauswertung für den Wirbelschichtapparat aus Figur 1 und 2.

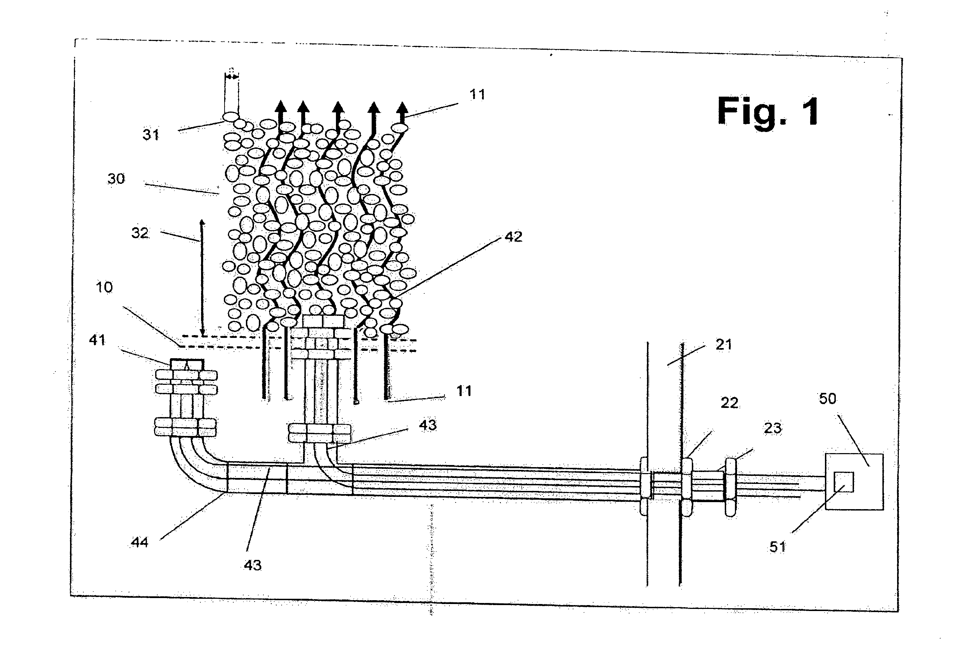

In der **Figur 1** ist rein schematisch eine Ansicht eines Wirbelschichtapparates gezeigt, bei dem keine Verblockung eingetreten ist.

Zu sehen ist im Schnitt ein Verteilboden 10, der senkrecht zur Zeichenebene steht. Der Verteilboden 10 weist eine Vielzahl an Durchbohrungen auf, durch welche von unten ein Fluidisierungsmedium 11 strömen kann.

Eine Zuführanordnung 20 befindet sich vor der Zeichenebene und sorgt dafür, dass zu behandelnde Partikel 31 in Blickrichtung des Betrachters oberhalb des Verteilbodens 10 in Richtung der Zeichenebene, durch diese hindurch und weiter gefördert werden.

Durch das von unten zuströmende Fluidisierungsmedium 11 werden die Partikel 31 vom Verteilboden 10 angehoben und es bildet sich eine Wirbelschicht 30 aus den Partikeln 31 und dem Fluidisierungsmedium 11.

Eine durchschnittliche Partikelgröße ist durch den Durchmesser d angegeben. Zwischen den Partikeln 31 und dem Verteilboden 10, über welchen sie sich bewegen sowie mit dem Fluidisierungsmedium 11 findet ein Temperaturaustausch statt. Dieser Temperaturaustausch benötigt physikalisch einen Kontakt der beteiligten Elemente. Ein hoher Anteil an Fluidisierungsmedium 11 in der Wirbelschicht 30 führt dazu, dass ein entsprechender Wärmeaustausch erst über eine relativ große Strecke erfolgt. Angedeutet ist in der Figur 1 eine Strecke 32, die etwa dem 15 bis 30-fachen des Durchmessers d eines Partikels 31 entspricht.

Weiter eingezeichnet ist eine Wand 21 mit einer Wanddurchführung 22 und einer Abdichtung 23 der Wanddurchführung 22. Durch diese Wanddurchführung 22 führen Messleitungen 43 in einem Schutzrohr 44.

Die Messleitungen 43 führen zu zwei in der Figur 1 dargestellten Sensoren, nämlich zu einem Sensor 41, der eine Temperatur unterhalb des Verteilbodens 10 misst, sowie zu einem Sensor 42, der eine Temperatur unmittelbar oberhalb des Verteilbodens 10 misst. Die Messleitungen 43 führen die von den Sensoren 41 und 42 aufgenommenen Temperaturwerte zu einer Auswerteeinrichtung 50. In dieser Auswerteeinrichtung 50 ist unter Anderem auch eine Vergleichseinrichtung 51 enthalten, die eine Differenz der von den Sensoren 41 und 42 aufgenommenen Temperaturen bildet. Die Auswerteeinrichtung 50 wertet dann diesen von der Vergleichseinrichtung 51 festgestellten Differenzwert aus, betrachtet beispielsweise die Veränderung dieses Wertes über die Zeit, und kann dann gegebenenfalls (nicht dargestellt) Änderungen der Prozesssteuerung des Wirbelschichtapparates vornehmen, also etwa die Geschwindigkeit ändern, mit der die Zuführanordnung 20 weitere Partikel 31 dem Verteilboden 10 zuführt, oder die Menge oder den Druck des Fluidisierungsmediums 11 ändern. Weitere Messleitungen 43 können zu weiteren Sensoren 41 und insbesondere 42 führen, die unter anderen Flächenbereichen oder Sektionen des Verteilbodens 10 angeordnet sind beziehungsweise durch Bohrungen in dem Verteilboden 10 an anderer Stelle in die Wirbelschicht 30 unmittelbar oberhalb des Verteilbodens 10 ragen.

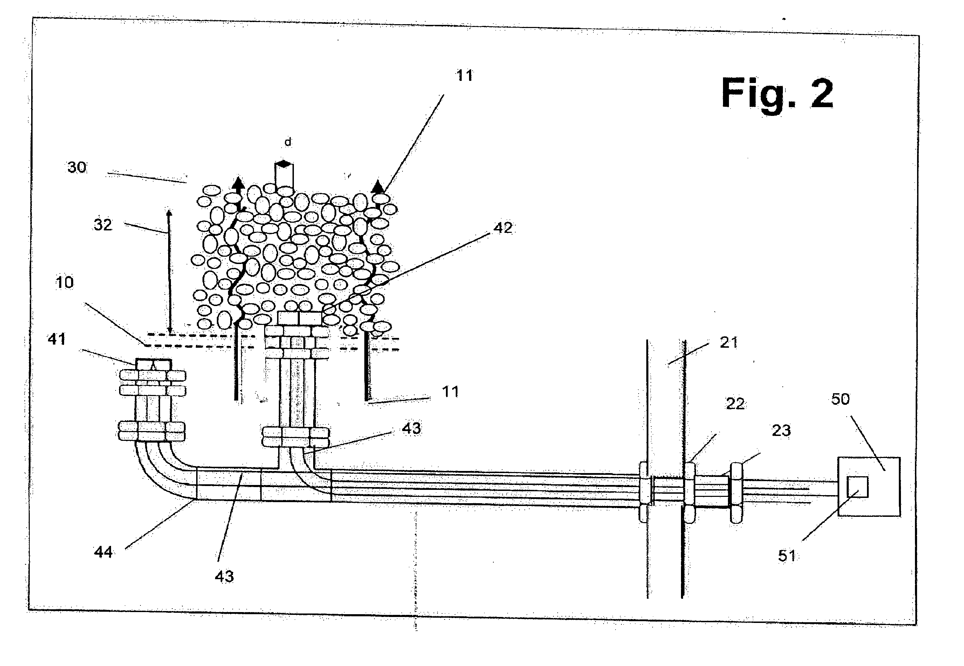

In der Figur 2 ist der gleiche Wirbelschichtapparat wie in der Figur 1 dargestellt. Auch hier sieht man den Verteilboden 10, eine Wand 21 mit einer Durchführung 22 und eine Abdichtung 23 für diese Durchführung 22 durch die Wand 21.

Daran angeschlossen ist wiederum ein Schutzrohr 44 mit mehreren Messleitungen 43, die zu den beiden Sensoren 41 und 42 führen.

Im Unterschied zur Figur 1 ist hier eine Verblockung eingetreten. Man sieht, dass das Fluidisierungsmedium 11 nicht mehr in der Lage ist, die Partikel 31 nennenswert oberhalb des Verteilbodens 10 anzuheben, sodass die Wirbelschicht 30 weitgehend zum Stillstand gekommen ist. Der Zustand der Verblockung ist also praktisch bereits eingetreten.

Man sieht nun auch, dass die Strecke 32, die in der Figur 1 nur etwa bis zur Hälfte der Höhe der Partikel 31 gereicht hat, in der Figur 2 trotz gleicher Streckenlänge nun bis über zu der obersten Schicht von Partikeln 31 in der Wirbelschicht 30 reicht. In der Situation in der Figur 2 ist also ein Wärmeaustausch schon weitgehend eingetreten; die Temperatur der Partikel 31 hat sich bis in den untersten Bereich der Wirbelschicht 30 zu den Temperatursensoren 42 hin ausgetauscht.

Während in der Situation in der Figur 1 die beiden Temperatursensoren 41 und 42 nahezu die gleiche Temperatur anzeigen, da in beiden Fällen die Temperatur etwa derjenigen des Verteilbodens 10 und des Fluidisierungsmediums 11 entspricht, ist in der Situation in den Figur 2 die Temperatur des Temperatursensors 41 zwar unverändert, die des Temperatursensors 42 hat nun aber den Wert der Partikeln 31 angenommen. Hier ist also eine sehr gut messbare und eindeutige Temperaturdifferenz festzustellen. Die Hauptursache für die Temperaturdifferenz ist die Verdampfung von Wasser oder von Lösungsmitteln. Darüber hinaus können noch Effekte dadurch entstehen, dass die Partikel 31 meist aus einer Vorbehandlung kommen und daher eine andere Temperatur aufweisen und auch während des Durchlaufens der Wirbelschicht behandelt werden, beispielsweise bedüst werden.

In der Figur 2 ist die Verblockung schon nahezu eingetreten, es ist jedoch leicht nachvollziehbar, dass es zwischen den beiden Situationen in den Figuren 1 und 2 einen nahezu kontinuierlichen Übergang gibt, bei dem eine Verblockung zunächst sich anbahnt und dann immer stärker wird. Dier Vorgang hat unmittelbar auch schon eine nahezu proportionale Anhebung der Temperatur zur Folge, die der Sensor 42 misst. Dies wiederum hat zur Folge, dass die Temperaturdifferenz zwischen den Temperaturwerten der Sensoren 41 und 42 bereits mit dem Beginn einer Verblockung rasch ansteigt, was die Vergleichseinrichtung 51 feststellt und von der Auswerteeinrichtung 50 entsprechend umgesetzt werden kann. Hierzu können beispielsweise Erfahrungswerte als Grenzwert für solche Temperaturdifferenzen eingesetzt werden und bei Erreichen bestimmter Grenzwerte auch jeweils hierzu passende Maßnahmen getroffen werden.

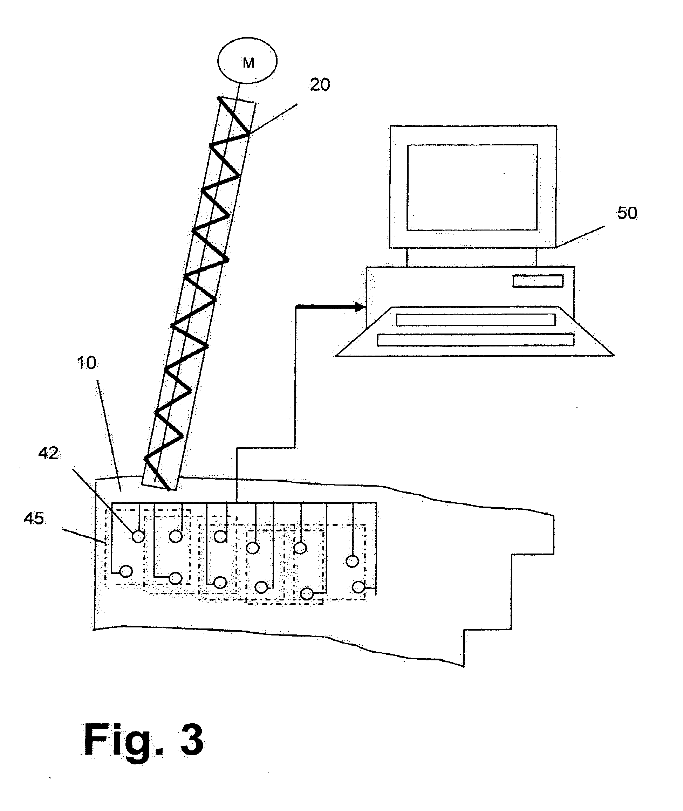

Wie dies etwa aussehen kann, ist in der Figur 3 dargestellt. Hier sieht man im unteren Teil dieser Figur von oben schematisch auf einen Verteilboden 10 und kann in diesem Verteilboden 10 mehrere Sensoren 42 erkennen. Angedeutet ist auch eine Zuführanordnung 20, mit der weitere Partikel 31 (in der Figur 3 nicht dargestellt) auf den Verteilboden 10 zugeführt werden.

Die Sensoren 42 sind angedeutet durch strichpunktierte Linien jeweils in Sensorgruppen 45 zusammengefasst. Die Messwerte der Sensoren 42 in den Sensorgruppen 45 werten dann (schematisch durch eine Linie dargestellt) an die Auswerteeinrichtung 50 übermittelt. Da (wie in den Figuren 1 und 2 dargestellt) die Auswerteeinrichtung 50 außerhalb des Bearbeitungsraumes steht, ist sie nicht von den physikalischen Randbedingungen des Wirbelschichtapparates betroffen.

### Bezugszeichen

- 10: Verteilboden
- 11: Fluidisierungsmedium

- 20: Zuführanordnung
- 21: Wand
- 22: Durchführung durch die Wand 21
- 23: Abdichtung für die Durchführung 22

- 30: Wirbelschicht
- 31: Partikel
- 32: Strecke

- 41: Temperatursensor
- 42: Temperatursensor
- 43: Messleitung
- 44: Schutzrohr
- 45: Sensorgruppe

- 50: Auswerteeinrichtung
- 51: Vergleichseinrichtung

- d: Durchmesser

## Patentansprüche

1. Wirbelschichtapparat,
mit einem Verteilboden (10),
mit einem Fluidisierungsmedium (11), welches von unten durch den Verteilboden (10) strömt,
mit einer Zuführanordnung (20), mit der Partikel (31) dem Bereich oberhalb des Verteilbodens (10) zugeführt werden,
wobei oberhalb des Verteilbodens (10) eine Wirbelschicht (30) aus Partikeln (31) und Fluidisierungsmedium (11) gebildetwird,
**dadurch gekennzeichnet,**
**dass** ein erster Temperatursensor (41) unterhalb des Verteilbodens (10) angeordnet ist,
**dass** ein zweiter Temperatursensor (42) oberhalb des Verteilbodens (10) unmittelbar auf dem Verteilboden (10) oder im untersten Bereich der Wirbelschicht (30) angeordnet ist,
**dass** die beiden Temperatursensoren (41, 42) mit einer Auswertungseinrichtung (50) verbunden sind, und
**dass** die Auswertungseinrichtung (50) so ausgebildet ist, dass sie abhängig von der Differenz der von den beiden Temperatursensoren (41, 42) gemessenen Temperaturen ein Signal für die Prozesssteuerung bereitstellt.

2. Wirbelschichtapparat nach Anspruch 1,
**dadurch gekennzeichnet,**
**dass** mehrere Temperatursensoren (42) oberhalb des Verteilbodens (10) in verschiedenen Flächenbereichen (Sektionen) des Verteilbodens (10) angeordnet sind, und
**dass** die mehreren Temperatursensoren (42) alle mit der Auswertungseinrichtung (50) verbunden sind und eine sektionsabhängige Signalauswertung ermöglichen.

3. Wirbelschichtapparat nach Anspruch 1 oder 2,
**dadurch gekennzeichnet,**
**dass** die Temperatursensoren oberhalb des Verteilbodens (10) in einem Abstand von weniger als 5 mm über dem Verteilboden (10) angeordnet sind.

4. Wirbelschichtapparat nach einem der Ansprüche 1 bis 3,
**dadurch gekennzeichnet,**
**dass** in der Auswerteeinrichtung (50) Grenzwerte gespeichert sind, die bei ihrem Überschreiten eine aktive Änderung der Prozesssteuerung veranlassen.

5. Verfahren zum Betreiben eines Wirbelschichtapparates, in welchem Partikel (31) über einen Verteilboden (30) geführt werden, durch welchen von unten ein Fluidisierungsmedium (11) strömt, sodass sich eine Wirbelschicht (30) ausbildet,
**dadurch gekennzeichnet,**
**dass** eine Temperatur unterhalb des Verteilbodens (10) gemessen wird, dass eine Temperatur unmittelbar oberhalb des Verteilbodens (10) gemessen wird,
**dass** die gemessenen Temperaturwerte unterhalb und oberhalb des Verteilbodens (10) miteinander verglichen werden, und
**dass** abhängig von dem zeitlichen Verlauf des Vergleichswertes Einfluss auf die Prozesssteuerung genommen wird.

## Claims

1. Fluidised bed apparatus comprising a distribution base (10), and having a fluidising medium (11) which flows from below through the distribution base (10), and having a feeding arrangement (20) with which particles (31) are fed to the region above the distribution base (10), wherein a fluidised bed (30) is formed above the distribution base (10) from particles (31) and fluidising medium (11), **characterised in that** a first temperature sensor (41) is arranged below the distribution base (10), **in that** a second temperature sensor (42) is arranged above the distribution base (10) directly on the distribution base (10) or in the lowest region of the fluidised bed (30), **in that** both the temperature sensors (41, 42) are connected to an evaluation device (50), and **in that** the evaluation device (50) is configured such that it provides a signal for the process control depending on the difference of temperatures measured by the two temperature sensors (41, 42).

2. Fluidised bed apparatus according to claim 1, **characterised in that** a plurality of temperature sensors (42) are arranged above the distribution base (10) in different area regions (sections) of the distribution base (10), and **in that** the plurality of temperature sensors (42) are all connected to the evaluation device (50) and enable a section-dependent signal evaluation.

3. Fluidised bed apparatus according to claim 1 or 2, **characterised in that** the temperature sensors are arranged above the distribution base (10) at a spacing of less than 5 mm over the distribution base (10).

4. Fluidised bed apparatus according to one of the claims 1 to 3, **characterised in that** there are stored in the evaluation device (50) limit values which, if they are exceeded, initiate an active change of the process control.

5. Method for operating a fluidised bed apparatus in which particles (31) are guided over a distribution base (30) through which a fluidising medium (11) flows from below such that a fluidised bed (30) forms, **characterised in that** a temperature below the distribution base (10) is measured, **in that** a temperature directly above the distribution base (10) is measured, **in that** the measured temperature values below and above the distribution base (10) are compared with one another, and **in that**, depending on the temporal pattern of the comparison value, influence is exerted on the process control.

## Revendications

1. Appareil à lit fluidisé,
avec un fond distributeur (10),
avec un milieu de fluidisation (11) qui s'écoule depuis le bas à travers le fond distributeur (10),
avec un agencement d'amenée (20) avec lequel des particules (31) sont amenées dans la zone située au-dessus du fond distributeur (10),
un lit fluidisé (30) composé de particules (31) et du milieu de fluidisation (11) étant formé au-dessus du fond distributeur (10),
**caractérisé en ce**
**qu'**un premier capteur de température (41) est disposé au-dessous du fond distributeur (10),
**qu'**un deuxième capteur de température (42) est disposé au-dessus du fond distributeur (10) directement sur le fond distributeur (10) ou dans la zone la plus basse du lit fluidisé (30),
**que** les deux capteurs de température (41, 42) sont reliés à un dispositif d'évaluation (50) et
**que** le dispositif d'évaluation (50) est conçu de façon à fournir un signal pour la commande du processus en fonction de la différence des températures mesurées par les deux capteurs de température (41, 42).

2. Appareil à lit fluidisé selon la revendication 1,
**caractérisé en ce**
**que** plusieurs capteurs de température (42) sont disposés au-dessus du fond distributeur (10) dans différentes zones de surface (sections) du fond distributeur (10) et
**que** lesdits plusieurs capteurs de température (42) sont tous reliés au dispositif d'évaluation (50) et permettent une évaluation des signaux en fonction de la section.

3. Appareil à lit fluidisé selon la revendication 1 ou 2,
**caractérisé en ce**
**que** les capteurs de température situés au-dessus du fond distributeur (10) sont disposés à une distance inférieure à 5 mm au-dessus du fond distributeur (10).

4. Appareil à lit fluidisé selon l'une des revendications 1 à 3,
**caractérisé en ce**
**que** des valeurs limites sont enregistrées dans le dispositif d'évaluation (50), dont le dépassement provoque une modification active de la commande du processus.

5. Procédé de fonctionnement d'un appareil à lit fluidisé, selon lequel des particules (31) sont guidées au-dessus d'un fond distributeur (30) à travers lequel un milieu de fluidisation (11) s'écoule depuis le bas, de sorte qu'il se forme un lit fluidisé (30),
**caractérisé en ce**
**qu'**une température est mesurée au-dessous du fond distributeur (10),
**qu'**une température est mesurée directement au-dessus du fond distributeur (10), que les valeurs de température mesurées au-dessous et au-dessus du fond distributeur (10) sont comparées entre elles et
**qu'**en fonction de la variation dans le temps de la valeur de comparaison, une influence est exercée sur la commande du processus.
